# EUROPÄISCHE PATENTANMELDUNG

(11) **EP 1 803 540 A1**
(43) Veröffentlichungstag der Anmeldung: **04.07.2007**
(21) Anmeldenummer: 06077238.1
(22) Anmeldetag: 27.12.2006
(51) Int. Cl.: B29C 47/90

(54) **Stufenlose einstellbare Kalibrierhülse für extrudierte Kunststoffrohre**

(30) Priorität: 29.12.2005 DE 102005063041
(71) Anmelder: INOEX GmbH, 32547 Bad Oeynhausen (DE)
(72) Erfinder: Klose, Reinhard, 31737 Rinteln (DE); Schmuhl, Jörg, 15711 Königs Wusterhausen (DE)
(74) Vertreter: Seewald, Jürgen

(57) **Zusammenfassung**

Die vorliegende Erfindung betrifft eine stufenlos einstellbare Kalibrierhülse für extrudierte Kunststoffrohre, die im laufenden Betrieb auf unterschiedliche Außendurchmesser von herzustellenden Kunststoffrohren verstellbar ist. Aufgabe der vorliegenden Erfindung ist es, eine Kalibrierhülse zur Verfügung zu stellen, die im laufenden Betrieb auf unterschiedliche Außendurchmesser von herzustellenden Kunststoffrohren verstellbar ist und einen einfachen Aufbau aufweist. Diese Aufgabe wird erfindungsgemäß dadurch gelöst, dass die Kalibrierhülse aus einem oder mehreren zu einem einheitlichen kreisrunden Querschnitt mit sich überlappenden Stoßstellen (23) gebogenen, flexiblen Blechsegmenten (11, 11.1) besteht, wobei auf dem Umfang der Blechsegmente (11, 11.1) radial verstellbare Druckelemente (14,16; 24, 25) angeordnet sind, durch deren Verstellung der Überlappungsgrad an den Stoßstellen (23) und damit der Durchmesser der Kalibrierhülse (10) änderbar ist.

## Beschreibung

Die vorliegende Erfindung betrifft eine stufenlos einstellbare Kalibrierhülse für extrudierte Kunststoffrohre, die im laufenden Betrieb auf unterschiedliche Außendurchmesser von herzustellenden Kunststoffrohren verstellbar ist.

Aus dem Stand der Technik sind Kalibrierhülsen bekannt, deren Innendurchmesser im laufenden Betrieb in engen Grenzen veränderbar ist. Diese Änderung des Innendurchmessers der Kalibrierhülse dient dazu, Kunststoffrohre unter Berücksichtigung der von verschiedenen Faktoren abhängenden Schrumpfung des Kunststoffes innerhalb der geforderten Toleranzgrenzen herzustellen. Ein Beispiel für derartige Kalibrierhülsen ist in der DE 44 08 064 C1 zu finden. Diese Kalibrierhülse besteht aus einem spiralig gewickelten Band in Form eines zweigängigen Gewindes mit großer Steigung, wobei zwischen den einzelnen Windungen ein Spalt vorhanden ist, um ein Vakuum und Kühlwasser auf das zu kalibrierende Extrudat einwirken lassen zu können. Das Band besteht aus Messing oder Bronze und hat einen rechteckigen Querschnitt. Durch Verdrehen der beiden Enden des Bandes kann der Innendurchmesser der Kalibrierhülse in engen Grenzen verändert werden.

In der DE 198 43 340 C2 ist eine Kalibrierhülse beschrieben, deren Innendurchmesser im laufenden Betrieb auf Kunststoffrohre unterschiedlicher Außendurchmesser einstellbar ist. Damit wird der Tatsache Rechnung getragen, dass unter den heutigen Produktionsbedingungen die Auftragslose immer kleiner werden, d.h., die Extrusionsanlagen ständig umgestellt werden müssen. Diese Umstellungen verursachen Stillstandzeiten der Extrusionsanlage, einen hohen Arbeitsaufwand beim Wechseln der einzelnen Ausrüstungskomponenten sowie Verluste an Kunststoffmaterial. Die Kalibrierhülse gemäß DE 198 43 340 C2 weist eine Vielzahl von in ihrer Längsachse angeordneten Lamellenkränzen auf, wobei die einzelnen Lamellen jedes Kranzes radial verstellbar sind und sich von Radialebene zu Radialebene überlappen und in den Überlappungsbereichen eng aneinander liegen. Dadurch wird ein Hohlzylinder geschaffen, der ein extrudiertes Rohr auf der Außenseite abstützt und in seinem Durchmesser, in Anpassung an den zu fahrenden Rohrdurchmesser verstellbar ist. Diese bekannte Kalibrierhülse ist relativ aufwändig aufgebaut. Außerdem lassen sich mit dieser Kalibrierhülse keine exakten kreisförmigen Querschnitte der Kunststoffrohre erzeugen.

In der DE 103 18 137 B3 ist ebenfalls eine Kalibrierhülse beschrieben, die im laufenden Betrieb auf unterschiedliche Außendurchmesser von herzustellenden Kunststoffrohren verstellbar ist. Diese Kalibrierhülse weist zwei Lagen von flexiblen Bändern auf, die sich nach Art eines Scherengitters kreuzen und an ihren Kreuzungspunkten gelenkig miteinander verbunden sind. Der für die Kalibrierung der extrudierten Kunststoffrohre wesentliche Innendurchmesser der Kalibrierhülse wird durch Auseinanderziehen bzw. Zusammendrücken des Scherengitters verändert. Diese Kalibrierhülse zeichnet sich durch einen großen Stellbereich bei hoher Eigensteifigkeit aus. Des weiteren garantiert die Vielzahl der sich kreuzenden, miteinander gelenkig verbundenen Bänder eine absolut kreisrunde Form der Kalibrierhülse bei jedem eingestellten Durchmesser. Diese Kalibrierhülse ist zwar einfacher aufgebaut als die zuvor erläuterte Kalibrierhülse gemäß DE 198 43 340 C2, ist in ihrer Konstruktion aber immer noch relativ aufwändig.

Aufgabe der vorliegenden Erfindung ist es, eine Kalibrierhülse zur Verfügung zu stellen, die im laufenden Betrieb auf unterschiedliche Außendurchmesser von herzustellenden Kunststoffrohren verstellbar ist und einen einfachen Aufbau aufweist.

Diese Aufgabe wird erfindungsgemäß mit einer Kalibrierhülse gelöst, die die Merkmale des Anspruchs 1 aufweist.

Die erfindungsgemäße Kalibrierhülse wird also durch mindestens ein flexibles Blechsegment gebildet, welches sich an seiner Stoßstelle überlappt. Der Begriff "flexibel" ist dabei so zu verstehen, dass das mindestens eine Blechsegment sich zu einem kreisrunden Querschnitt biegen lässt und durch radial einwirkende Kräfte weiter so verformbar ist, dass der Überlappungsgrad an seiner Stoßstelle bzw. an den Stoßstellen veränderbar ist, was mit einer Durchmesseränderung der Kalibrierhülse einhergeht. Die Länge der Kalibrierhülse wird durch die Breite des Blechsegments bestimmt. Eine solche Kalibrierhülse ist sehr einfach aufgebaut, wobei ihr Durchmesser in weiten Grenzen änderbar ist. Es versteht sich, dass das oder die Blechsegment(e) auf ihrem Umfang und ihrer Breite Durchbrechungen aufweisen, um ein Vakuum und Kühlwasser auf die Oberfläche eines extrudierten Rohres einwirken lassen zu können.

Weitere vorteilhafte Ausgestaltungen der Erfindung ergeben sich aus den Unteransprüchen.

Die Erfindung wird nachstehend anhand eines Ausführungsbeispiels näher erläutert. In der dazugehörigen Zeichnung zeigt:
- Fig.1: eine Extrusionsanlage zur Herstellung von Kunststoffrohren mit ihren Hauptkomponenten in schematischer Darstellung,
- Fig. 2: eine perspektivische Darstellung einer Kalibrierhülse nach einer ersten Ausführungsform der Erfindung,
- Fig. 3: eine Seitenansicht dieser Kalibrierhülse mit Einrichtungen zur Veränderung ihres Durchmessers,
- Fig. 4: eine perspektivische Darstellung einer Kalibrierhülse nach einer zweiten Ausführungsform der Erfindung,
- Fig. 5: eine Darstellung gemäß Fig. 4 mit schematischer Darstellung von auf den Umfang der Kalibrierhülse einwirkenden, radial verstellbaren Druckelementen,
- Fig. 6: eine Seitenansicht mit in einem Verstellkopf eingebauten Druckelementen bei auf einen großen Durchmesser eingestellter Kalibrierhülse, und
- Fig. 7: eine Darstellung gemäß Fig. 6 bei auf einen kleinen Durchmesser eingestellter Kalibrierhülse.

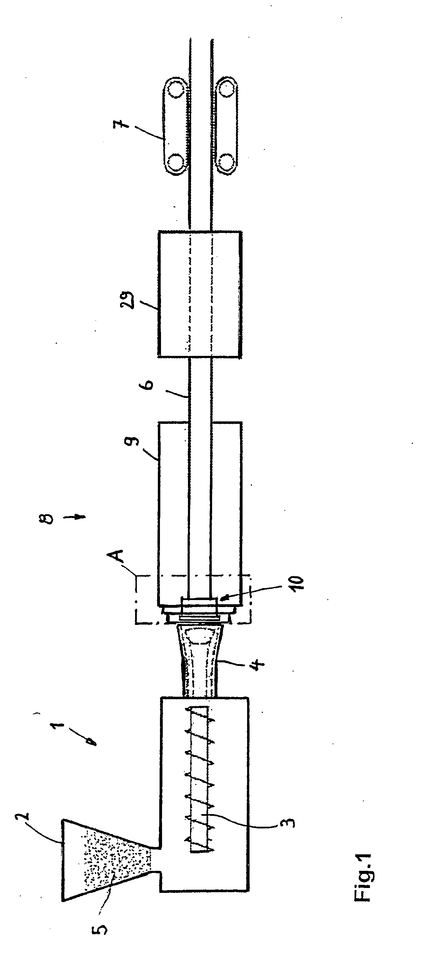

Die in Fig. 1 dargestellte Extrusionsanlage umfasst eine Extrudereinheit 1 mit einem Aufgabetrichter 2, einer Extruderschnecke 3 und einem Extrusionswerkzeug 4. Über den Aufgabetrichter 2 wird ein thermoplastischer Kunststoff 5 in Granulat- oder Pulverform der Extrudereinheit 1 zugeführt. In der Extrudereinheit 1 wird das Granulat bzw. Pulver erwärmt, geknetet und plastifziert. Anschließend wird der Kunststoff als formbare Masse durch die Extruderschnecke 3 in das Extrusionswerkzeug 4 gefördert und dort durch einen ringförmigen Durchtrittsspalt gedrückt.

Nach dem Austritt aus dem Extrusionswerkzeug 4 wird das heiße, noch verformbare Rohr 6 mittels einer am Ende der Extrusionslinie angeordneten Abzugseinheit 7 durch eine Kalibrier- und Kühleinheit 8 gezogen, die einen Vakuumtank 9 mit einer an dessem Eingang angeordneten, perforierten Kalibrierhülse 10 aufweist. Die Kalibrierhülse 10 ist stufenlos im Durchmesser einstellbar, so dass das extrudierte, noch formbare Rohr 6 auf den gewünschten Außendurchmesser fixiert werden kann. Nach dem Verlassen der Kalibrier- und Kühleinheit 8 tritt das Rohr 6 in eine Kühlstrecke 29 ein, in der es auf Raumtemperatur abgekühlt wird.

Der Aufbau der Kalibrierhülse 10 wird nachstehend näher beschrieben.

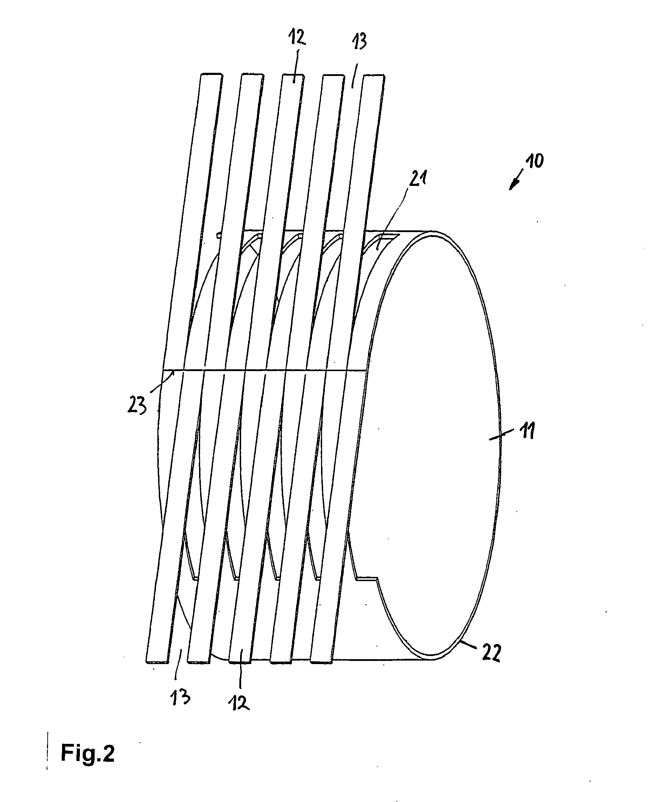

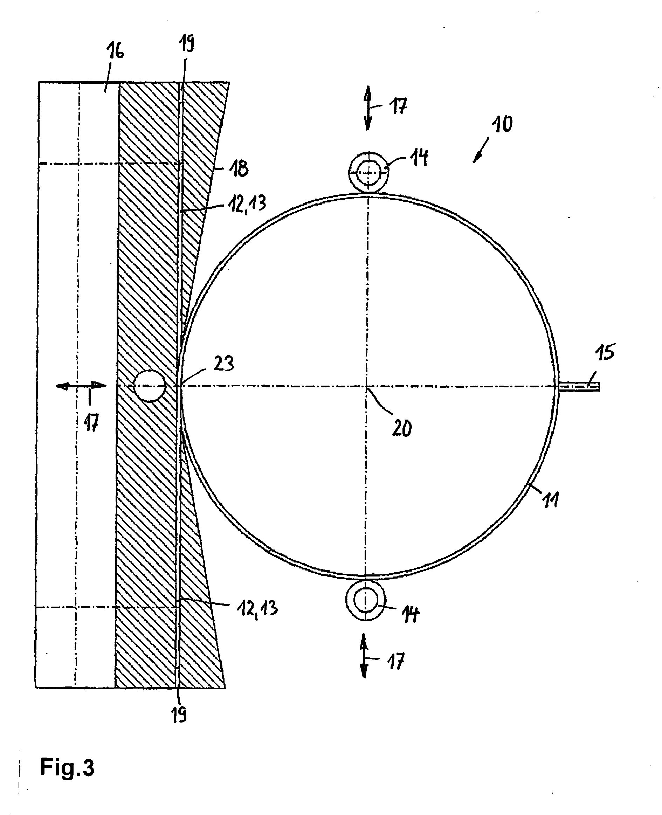

In dem in den Fig. 2 und 3 gezeigten Ausführungsbeispiel besteht die Kalibrierhülse 10 aus einem streifenförmigen Blechsegment 11, das an seinen Enden jeweils auf etwa einem Viertel seiner Länge geschlitzt ist. Diese Schlitzung erfolgt mit gleicher Teilung, so dass sich Streifen 12 gleicher Breite und Länge mit dazwischen liegenden Lücken 13 von eben solcher Breite und Länge abwechseln. Dabei erfolgte die Schlitzung an den beiden Enden des Blechsegments 11 so, dass die Streifen 12 des einen Endes in die Lücken 13 des anderen Endes kämmend eingreifen können, wenn das Blechsegment 11 zu einem Zylinder mit kreisförmigem Querschnitt gebogen ist, wie das insbesondere aus Fig. 2 hervorgeht. Aus dieser Darstellung ist auch ersichtlich, dass sich die Enden des Blechsegments 11 an der Stoßstelle 23 überlappen.

Auf den Umfang der Kalibrierhülse 10 verteilt sind Druckelemente angeordnet. Dabei handelt es sich um zwei sich diametral gegenüberliegende Druckrollen 14, ein Widerlager 15 und ein diesem diametral gegenüberliegendes Führungslager 16. Während das Widerlager 15 ortsfest und mit dem Blechsegment 11 z. B. durch eine Schweißung verbunden ist, sind die Druckrollen 14 und das Führungslager 16 synchron radial verstellbar, was durch Pfeile 17 angedeutet ist.

Das Führungslager 16 besitzt eine dem Blechsegment 11 zugewandte prismatische Lagerfläche 18, an der das Blechsegment 11 an seinem Umfang geführt ist. Vom Scheitelpunkt der prismatischen Lagerfläche 18 gehen etwa tangential zum kreisförmigen Querschnitt des Blechsegments 11 in beide Richtungen Führungsschlitze 19 ab, deren lichte Weite so bemessen ist, dass sie die Blechstreifen 12 der geschlitzten Enden des Blechsegments 11 ohne Zwängung aufnehmen können, d.h., dass die Blechstreifen 12 in Längsrichtung der Führungsschlitze 19 verschiebbar sind.

Zur Änderung des Durchmessers der Kalibrierhülse 10 werden die Druckelemente 14 und 16 synchron radial verstellt. Bei Verstellung nach innen wird der Durchmesser der Kalibrierhülse 10 verkleinert, wobei sich der Überlappungsgrad der Enden des Blechsegments 11 vergrößert, d.h., die Blechstreifen 12 werden weiter in die Führungsschlitze 19 hineingeschoben. Bei radialer Verstellung nach außen passiert das Gegenteil, d.h., der Überlappungsgrad der Stoßstelle des Blechsegments 11 verringert sich, wodurch die Streifen 12 zum Teil aus den Führungsschlitzen 19 des Führungslagers 16 hinausgezogen werden. Bei diesen Verstellbewegungen garantiert das fixe Widerlager 15, dass sich die Extrusionshöhe, die durch den Mittelpunkt 20 des Querschnitts des Blechsegments 11 gegeben ist, nicht verändert.

Je nach Überlappungsgrad der Enden des Blechsegments 11 verbleiben auf dem Umfang der Kalibrierhülse 10 freie, rechteckige Öffnungen 21, die einen Zugang für Kühlwasser zur Oberfläche des kalibrierten Rohres 6 bzw. für die Beaufschlagung der Oberfläche des Rohres 6 mit einem Unterdruck gewährleisten. Auf der von den Öffnungen 21 freien Mantelfläche des Blechsegments 11 sind aus dem gleichen Grunde in der Zeichnung nicht dargestellte Perforationen vorgesehen.

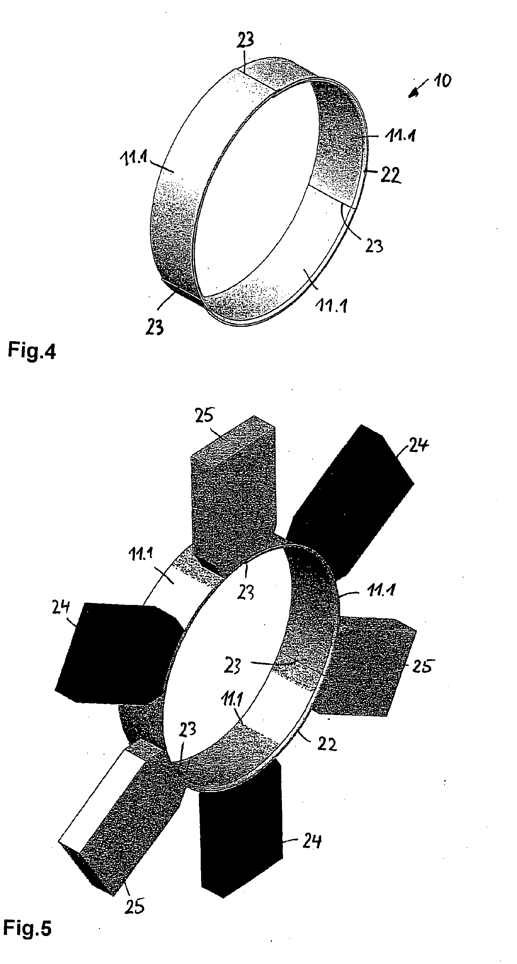

Um den Einlauf eines extrudierten Rohres 6 in die Kalibrierhülse 10 zu erleichtern, kann deren Einlaufkante 22 aufgekelcht sein, wie bei der Kalibrierhülse gemäß Fig. 4 dargestellt.

In dem Ausführungsbeispiel gemäß den Fig. 4-7 besteht die Kalibrierhülse 10 aus drei Blechsegmenten 11.1 gleicher Länge und Breite. Diese Blechsegmente 11.1 überlappen sich an ihren drei Stoßstellen 23. Sie sind zu einem einheitlichen kreisrunden Querschnitt verformt.

Auf den Umfang der einen Hohlzylinder bildenden Blechsegmente 11.1 sind Druckelemente 24, 25 gleichmäßig verteilt, wobei die Druckelemente 24 jeweils mittig von einem Blechsegment 11.1 angeordnet und mit diesem durch eine Verschraubung 26 verbunden sind. Die Druckelemente 25 sind jeweils im Überlappungsbereich der Blechsegmente 11.1 angeordnet und mit diesen nicht verbunden, so dass die Blechsegmente 11.1 auf den Ihnen zugewandten Stirnseiten 27 der Druckelemente 25 gleiten können. Die Stirnseiten 27 der Druckelemente 24, 25 haben einen Radius, der dem Radius der größtmöglichen Einstellung der Kalibrierhülse 10 entspricht.

Die Druckelemente 24, 25 sind in einem Verstellkopf 28 geführt und durch entsprechende Antriebe synchron in beide Richtungen radial verstellbar. Dieser Antrieb kann dem aus der DE 10 2004 029 498 B3 bekannten Antrieb entsprechen, auf den hiermit verwiesen wird. Es sind aber natürlich auch andere geeignete Antriebe zur synchronen Verstellung der Druckelemente 24, 25 einsetzbar.

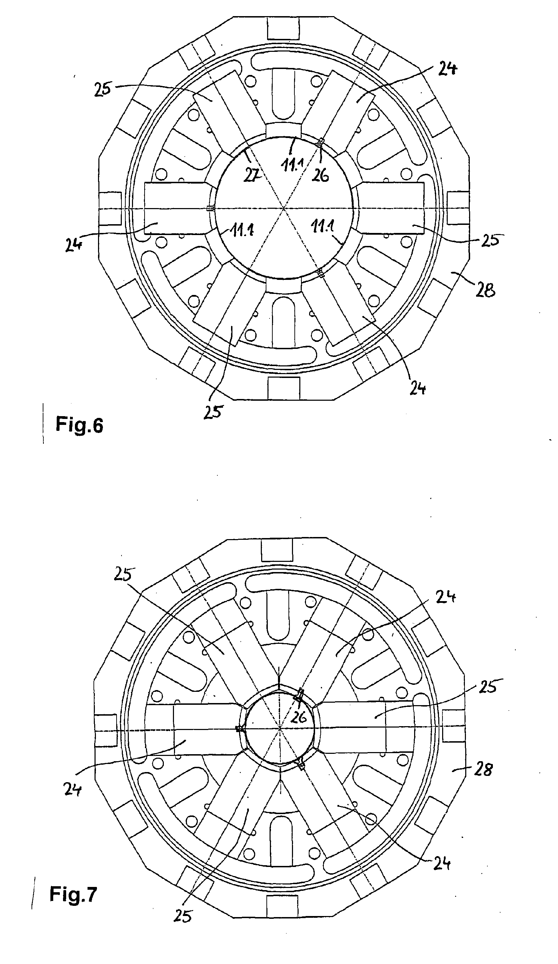

Fig. 6 zeigt die größtmögliche Einstellung der Kalibrierhülse 10, an der die Mantelfläche der Blechsegmente 11.1 vollflächig an den Stirnseiten 27 der Druckelemente 24, 25 anliegen.

Fig. 7 zeigt den kleinsten, einstellbaren Durchmesser der Kalibrierhülse 10, bei der der Überlappungsgrad der Blechsegmente 11.1 an ihren Stoßstellen 23 am größten ist. Die Mantelfläche der Blechsegmente 11.1 liegt bei dieser Einstellung im wesentlichen nur noch linienförmig an den Stirnseiten 27 der Druckelemente 22, 25 an. Aufgrund der allseitigen gleichmäßigen Abstützung der Mantelfläche der Blechsegmente 11.1 besitzt die Kalibrierhülse 10 aber weiterhin einen exakt kreisförmigen Querschnitt.

Wegen der erforderlichen Beaufschlagung der extrudierten Rohre 6 mit Vakuum und Kühlwasser sind die Blechsegmente 11.1 perforiert, was in der Zeichnung nicht dargestellt ist.

Um die Ausbildung von Marken oder Längsrillen auf der Außenoberfläche der extrudierten Rohre 6 zu vermeiden, ist es zweckmäßig, wenn die Stoßstellen 23 so ausgebildet sind, dass sie vom Eingang zum Ausgang der Kalibrierhülse 10 schräg verlaufen.

## Patentansprüche

1. Stufenlos einstellbare Kalibrierhülse für extrudierte Kunststoffrohre mit einem oder mehreren zu einem einheitlichen kreisrunden Querschnitt mit sich überlappenden Stoßstellen (23) gebogenen, flexiblen Blechsegmenten (11, 11.1) wobei auf dem Umfang der Blechsegmente (11, 11.1) radial verstellbare Druckelemente (14,16; 24, 25) angeordnet sind, durch deren Verstellung der Überlappungsgrad an den Stoßstellen (23) und damit der Durchmesser der Kalibrierhülse (10) änderbar ist.

2. Kalibrierhülse nach Anspruch 1, **dadurch gekennzeichnet, dass** sie aus einem streifenförmigen Blechsegment (11) besteht, das an seinen Enden mit gleicher Teilung geschlitzt ist, so dass sich Streifen (12) gleicher Breite und Länge mit dazwischen liegenden Lücken (13) von eben solcher Breite und Länge abwechseln, wobei die Streifen (12) des einen Endes in die Lücken (13) des anderen Endes kämmend eingreifen, wenn das Blechsegment (11) zu einem Zylinder mit kreisförmigem Querschnitt gebogen ist.

3. Kalibrierhülse nach Anspruch 2, **dadurch gekennzeichnet, dass** auf dem Umfang des Blechsegments (11) Druckelemente in Form von zwei sich diametral gegenüberliegenden Druckrollen (14), eines Widerlagers (15) und eines diesem diametral gegenüberliegenden Führungslagers (16) angeordnet sind, wobei das Widerlager (15) ortsfest und mit dem Blechsegment (11) starr, z. B. durch eine Schweißung, verbunden ist, und die Druckrollen (14) und das Führungslager (16) synchron radial verstellbar sind.

4. Kalibrierhülse nach Anspruch 3, **dadurch gekennzeichnet, dass** das Führungslager (16) etwa tangential zum kreisförmigen Querschnitt des Blechsegments (11) in beide Richtungen verlaufende Führungsschlitze (19) aufweist, deren lichte Weite so bemessen ist, dass sie die Blechstreifen (12) der geschlitzten Enden des Blechsegments (11) ohne Zwängung aufnehmen können, so dass die Blechstreifen (12) in Längsrichtung der Führungsschlitze (19) verschiebbar sind.

5. Kalibrierhülse nach Anspruch 1, **dadurch gekennzeichnet, dass** sie aus mindesten zwei streifenförmigen Blechsegmenten (11.1) besteht, wobei jeweils ein Druckelement (24) etwa mittig zwischen den Stoßstellen (23) und ein anderes Druckelement (25) jeweils im Überlappungsbereich der Blechsegmente (11.1) angeordnet ist, wobei die Druckelemente (24) an ihren Stirnseiten (27) mit den Blechsegmenten (11.1) verschraubt sind, während die Stirnseiten (27) der Druckelemente (25) einen Gleitkontakt mit den Blechsegmenten (11.1) haben.

6. Kalibrierhülse nach Anspruch 1, **dadurch gekennzeichnet, dass** die Stoßstellen (23) vom Eingang zum Ausgang der Kalibrierhülse (10) einen schrägen oder bogenförmigen Verlauf haben.

7. Kalibrierhülse nach einem der vorstehenden Ansprüche, **dadurch gekennzeichnet, dass** die Einlaufkante (22) der Blechsegmente (11, 11.1) aufgekelcht ist.

8. Kalibrierhülse nach einem der vorstehenden Ansprüche, **dadurch gekennzeichnet, dass** die Blechsegmente (11, 11.1) perforiert sind.
